# EUROPEAN PATENT APPLICATION

(11) **EP 3 873 114 A1**
(43) Date of publication of application: **01.09.2021**
(21) Application number: 21159183.9
(22) Date of filing: 25.02.2021
(51) Int. Cl.: H04W 4/40, H04W 4/024, H04W 4/02

(54) **SYSTEMS AND METHODOLOGY FOR VOICE AND/OR GESTURE COMMUNICATION WITH DEVICE HAVING V2X CAPABILITY**

(30) Priority: 26.02.2020 IN 202011008104; 04.05.2020 US 202016865789
(71) Applicant: NXP B.V., 5656 AG Eindhoven (NL)
(72) Inventor: RAJAN KESAVELU SHEKAR, Pramod, Redhill, Surrey RH1 1QZ (GB); SHIRWAL, Anand, Redhill, Surrey RH1 1QZ (GB)
(74) Representative: Hardingham, Christopher Mark

(57) **Abstract**

A system includes a first communication module for receiving a user message, a processing unit for converting the user message to a vehicle-to-everything (V2X) message, and a second communication module. The first communication module, the processing unit, and the second communication modules are implemented in a first vehicle. The second communication module is configured to transmit the V2X message from the first vehicle via a wireless communication link. The first vehicle may be a drone configured to communicate with a user device positioned on or near a user, and the user message may be an audible message or user gestures. Alternatively, the first vehicle may be inhabited by the user, with the user message being an audible message. The system may enable communication with an autonomous vehicle or another device equipped with V2X capability.

## Description

### TECHNICAL FIELD OF THE INVENTION

The present invention relates generally to communication with devices equipped with vehicle-to-everything (V2X) capability. More specifically, the present invention relates to systems and methodology for enabling communication between human users and vehicles having at least semi-autonomous motion capability and other devices equipped with V2X capability by conversion of user messages (e.g., voice, gesture) to vehicle-to-everything (V2X) messages and vice versa.

### BACKGROUND OF THE INVENTION

Vehicles having at least semi-autonomous or fully autonomous motion capability may occasionally be required to follow non-standard directions from police officers, traffic authorities, and the like under certain atypical situations. These atypical situations could include navigating at accident scenes, broken traffic signals, temporary road blockages or diversions due to roads undergoing unplanned maintenance, extreme weather conditions, and so forth. Following the conventional, pre-programmed rules of driving may be insufficient in such unusual situations. Further, other situations may occur in which the appropriate authorities need to interact with a semi-autonomous or fully autonomous vehicle. In an example situation, an authority may need to pull over an autonomous vehicle. Under any of these situations, semi-autonomous or fully autonomous vehicles will need to unambiguously understand the instructions of appropriate authorities.

### SUMMARY

Aspects of the disclosure are defined in the accompanying claims.

In a first aspect, there is provided a system comprising a first communication module configured to receive a user message, a processing unit configured to convert the user message to a vehicle-to-everything (V2X) message, and a second communication module, wherein the first communication module, the processing unit, and the second communication module are implemented in a first vehicle, and the second communication module is configured to transmit the V2X message from the first vehicle via a wireless communication link.

In a second aspect, there is provided a method comprising receiving a user message at a first vehicle, converting the user message to a vehicle-to-everything (V2X) message at the first vehicle, and transmitting the V2X message from the first vehicle via a wireless communication link.

### BRIEF DESCRIPTION OF THE DRAWINGS

The accompanying figures in which like reference numerals refer to identical or functionally similar elements throughout the separate views, the figures are not necessarily drawn to scale, and which together with the detailed description below are incorporated in and form part of the specification, serve to further illustrate various embodiments and to explain various principles and advantages all in accordance with the present invention.
FIG. 1 shows a conceptual diagram of a system for communication between vehicles in accordance with an embodiment;
FIG. 2 shows an example of a system that includes an electronic device worn by a human user and an unmanned vehicle;
FIG. 3 shows a front view of the human user wearing the electronic device;
FIG. 4 shows a block diagram of the electronic device worn by the human user;
FIG. 5 shows a simplified block diagram of components on-board the unmanned vehicle;
FIG. 6 shows a flowchart of a monitoring and command process in accordance with another embodiment;
FIG. 7 shows a flowchart of an adaptive speed and position control subprocess of the monitoring and command process of FIG. 6;
FIG. 8 shows a flowchart of a data acquisition subprocess of the monitoring and command process of FIG. 6;
FIG. 9 shows a flowchart of a user message to V2X conversion subprocess of the monitoring and command process of FIG. 6;
FIG. 10 shows a flowchart of a V2X to user message conversion subprocess of the monitoring and command process of FIG. 6;
FIG. 11 shows a conceptual diagram of a system for communication between vehicles in accordance with another embodiment;
FIG. 12 shows a block diagram of the system of FIG. 11; and
FIG. 13 shows a conceptual diagram of a system for communication between a vehicle and a device equipped with V2X capability in accordance with an embodiment.

### DETAILED DESCRIPTION

In overview, the present disclosure concerns systems and methodology for enabling communication between human users and vehicles having at least semi-autonomous motion capability. More particularly, systems and methodology enable the interaction of an authorized authority, e.g., a traffic officer, with autonomous vehicles by converting user messages (e.g., audible or gestures) to equivalent voice-to-everything (V2X) messages and vice versa. In some embodiments, the conversion of audible messages to equivalent V2X messages may be performed using a trained, authenticated unmanned vehicle (e.g., a drone) as a communication medium. The system and methodology may entail real time autonomous positioning and navigation of the unmanned vehicle in accordance with user messages. The unmanned vehicle may further include one or more cameras for capturing motion of the user which can be converted to user messages. Still further, the one or more cameras may be configured to capture an ambient environment visible from the one or more cameras and provide visual information of the ambient environment to the user. In other embodiments, a system in a vehicle of the authorized authority may be used as a communication medium for converting audible messages to equivalent V2X messages and vice versa. In still other embodiments, systems and methodology may enable the interaction of an authorized authority with other nonvehicular devices equipped with V2X capability.

It should be understood that the term "vehicle" or "vehicular" or other similar terms as used herein are inclusive of motor vehicles in general such as passenger automobiles including sports utility vehicles (SUVs), buses, trucks, various commercial vehicles, watercraft including a variety of boats and ships, aircraft, and the like, and includes hybrid vehicles, electric vehicles, combustion, plug-in hybrid electric vehicles and any other alternative fuel vehicles (e.g., fuels derived from resources other than petroleum). It should be further understood that the term "semi-autonomous" or "autonomous" or other similar terms as used herein are inclusive of motor vehicles that may be categorized as any of Level 1 though Level 5 categories of autonomy, in which Level 1 is defined as the vehicle being able to control either steering or speed autonomously in specific circumstances to assist the driver and Level 5 is defined as the vehicle being able to complete travel autonomously in any environmental conditions. Still further, it should be understood that the term "equipped with V2X capability" may include any roadside units, "smart" traffic lights, "smart" parking infrastructures, or any other non-vehicular structure that may be enabled to interact with an authorized authority by way of V2X communication.

The instant disclosure is provided to further explain in an enabling fashion at least one embodiment in accordance with the present invention. The disclosure is further offered to enhance an understanding and appreciation for the inventive principles and advantages thereof, rather than to limit in any manner the invention. The invention is defined solely by the appended claims including any amendments made during the pendency of this application and all equivalents of those claims as issued.

It should be understood that the use of relational terms, if any, such as first and second, top and bottom, and the like are used solely to distinguish one from another entity or action without necessarily requiring or implying any actual such relationship or order between such entities or actions.

### UNMANNED VEHICLE PAIRED WITH USER DEVICE

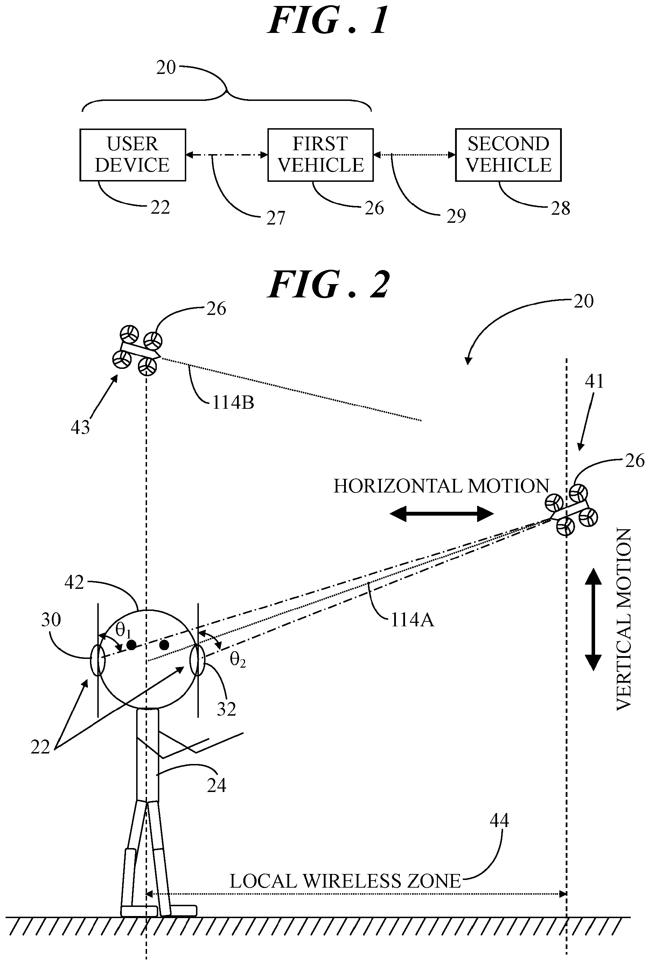

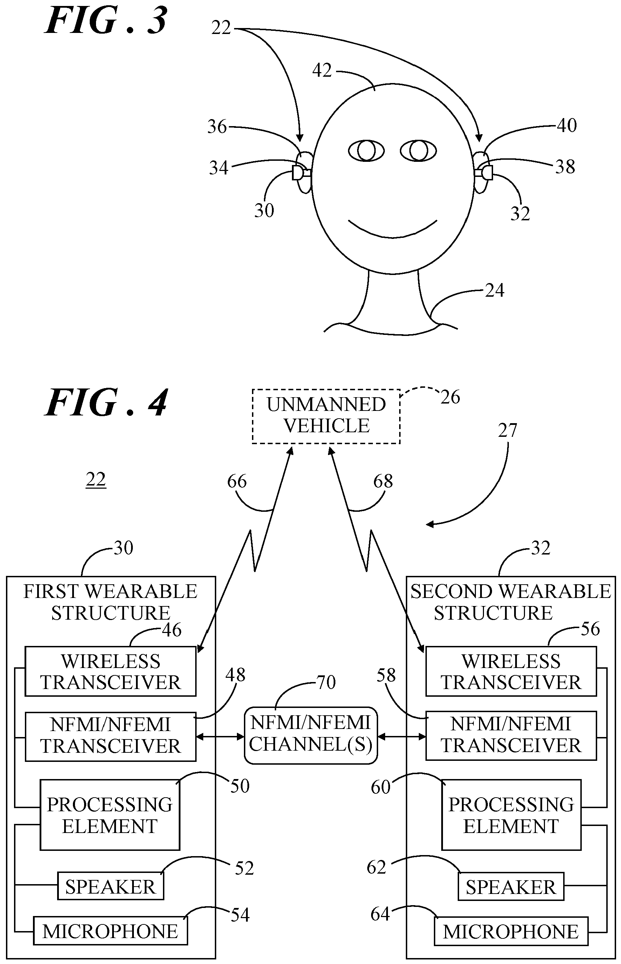

Referring to FIGs. 1-3, FIG. 1 shows a conceptual diagram of a system 20 for communication between vehicles in accordance with an embodiment. FIG. 2 shows an example of system 20 that includes an electronic device, referred to herein as user device 22, worn by a human user 24. System 20 further includes elements (described below) that are implemented in a first vehicle, referred to herein as an unmanned vehicle 26. User device 22 and unmanned vehicle 26 are configured to communicate with one another. FIG. 3 shows a front view of human user 24 wearing user device 22. System 20 enables communication between user device 22 and a second vehicle 28, with unmanned vehicle 26 functioning as a communication medium. As discussed herein human user 24 may be a police officer, first responder, traffic warden, or any other authorized authority. For simplicity, human user 24 will generally be referred to herein as a user 24. Second vehicle 28 may be any semi-autonomous or fully autonomous vehicle. For clarity, second vehicle 28 will be generally referred to herein as autonomous vehicle 28.

Unmanned vehicle 26 may be any of a number of vehicles including, for example, unmanned aerial vehicles (UAV), unpiloted aerial vehicles, remotely piloted aircraft, unmanned aircraft systems, any aircraft covered under Circular 328 AN/190 classified by the International Civil Aviation Organization, and so forth. As an example, unmanned vehicle 26 may be in the form or a single or multi-rotor copter (e.g., a quadcopter) or a fixed wing aircraft. In addition, certain aspects of the disclosure may be utilized with other types of unmanned vehicles (e.g., wheeled, tracked, spacecraft, and/or water vehicles). For simplicity, unmanned vehicle 26 will be generally referred to herein as a drone 26.

As briefly mentioned above, system 20 enables communication between user device 22 and autonomous vehicle 28. Autonomous vehicle 28 is enabled for vehicle external communications. Vehicle external communications may be communications for transferring information between a vehicle and an object located outside the vehicle, and may be referred to as vehicle-to-everything (V2X) communications. In this example, autonomous vehicle 28 may be equipped to communicate with drone 26 via V2X communications. Accordingly, communication between user device 22 and unmanned vehicle 26 may be over a secured wireless radio link 27 and communication between unmanned vehicle 26 and autonomous vehicle 28 may be over a V2X communication link 29. Further, a first wireless communication technology (e.g., Bluetooth Classic, Bluetooth Low Energy (BLE), Ultra-Wide Band (UWB) technology, and so forth) may be implemented to enable communication between user device 22 and drone 26 and a different second wireless communication technology (e.g., V2X communication technologies such as wireless local area network (WLAN)-based communications, dedicated short-range communications (DSRC), cellular V2X, and so forth) may be implemented to enable communication between drone 26 and autonomous vehicle 28.

In an embodiment, user device 22 of system 20 include may include first and second wearable structures 30, 32 configured to be positioned on user 24, with second wearable structure 32 being physically displaced away from first wearable structure 30. As best shown in FIG. 3, first wearable structure 30 includes at least a first portion 34 configured to be disposed within a first ear 36 of user 24 and second wearable structure 32 includes a second portion 38 configured to be disposed with a second ear 40 of user 24. The wear location of first and second wearable structures 30, 32 places each of them in a near constant position and orientation with respect to the head 42/ears 36, 40 of user 24.

In the example embodiment, first and second wearable structures 30, 32 may be hearing instruments, sometimes simply referred to as hearables. In this instance, first and second wearable structures 30, 32 as hearables may include a microphone and speaker combination, a processing element to process the signal captured by the microphone and to control the output of the speaker, and one or more wireless communication modules (e.g., transceivers) for enabling wireless communication. Further details of the components within first and second wearable structures 30, 32 will be provided below in connection with FIG. 4. In alternative embodiments, first and second wearable structures 30, 32 need not be hearables, but may be any suitable electronic device that can be positioned on or near user 24 for the purpose of monitoring and communication with drone 26.

Some embodiments entail real time autonomous positioning and navigation of drone 26 relative to user 24 for the purposes of collecting user messages from user 24 (e.g., gesture) and/or capturing visual information of an ambient environment. Accordingly, as shown in FIG. 2, drone 26 may be at first location 41 facing user 24 for the purpose of collecting user messages (e.g., gestures) from user 24. As further shown in FIG. 2, drone 26 may be at a second location 43 above user 24 and facing the same direction as user 24 for capturing visual information of the ambient environment. Drone 26 flying at a height distance above user 24 may provide the advantage of extended range of visibility in the given environment (e.g., for monitoring traffic density, and so forth).

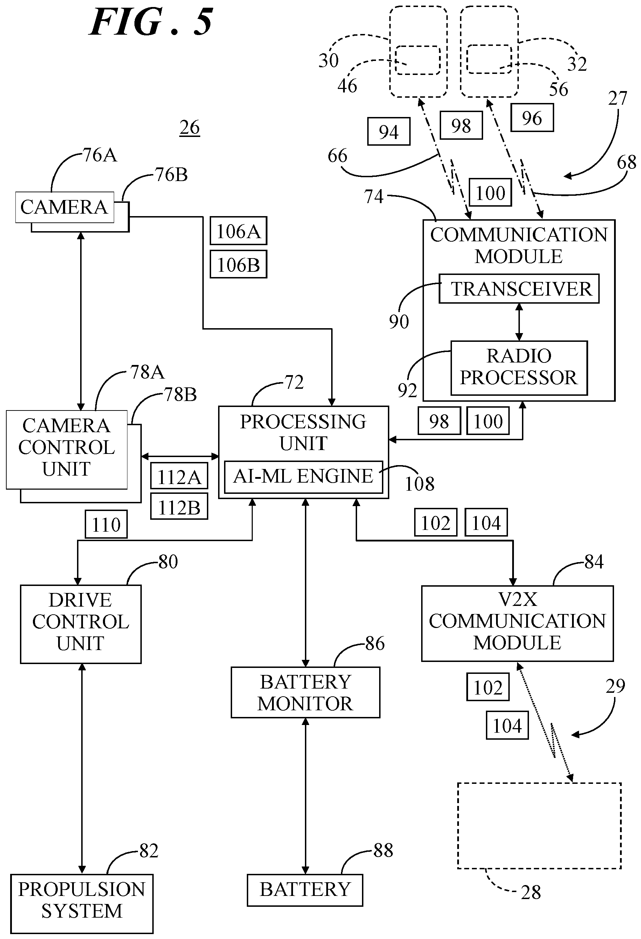

Further, embodiments entail conversion of the user messages to vehicle-to-everything (V2X) messages at drone 26 and communication of the V2X messages from drone 26 to autonomous vehicle 28. Still further, some embodiments entail the receipt of V2X messages at drone 26 transmitted from autonomous vehicle 28, conversion of the V2X messages to user messages, and communication of the user messages to user device 22. As will be discussed in significantly greater detail below, drone 26 and electronic device 22 are configured to cooperatively establish a local wireless communication zone 44 so as to enable communication between user device 22 and drone 26 for at least autonomous positioning and navigation of drone 26 relative to user 24, data communication, feedback, voice commands, gesture commands, and so forth. Further details of the components within drone 26 will be provided below in connection with FIG. 5.

FIG. 4 shows a block diagram of user device 22 worn by user 24 (FIG. 2). First wearable structure 30 includes at least a first wireless transceiver 46, a first near field magnetic induction/near field electromagnetic induction (NFMI/NFEMI) transceiver 48, and a processing element 50. In some embodiments, first wearable structure 30 may additionally include a speaker 52 and a microphone 54. Similarly, second wearable structure 32 includes at least a second wireless transceiver 56, a second NFMI/NFEMI transceiver 58, and a processing element 60. In some embodiments, second wearable structure 32 may additionally include a speaker 62 and a microphone 64. NFMI refers to a short-range communication technique that makes use of transmissions within a localized magnetic field. NFEMI, which is an extension of NFMI, is a communication technique that also makes use of transmissions within a localized magnetic field and uses an electric antenna for transmissions.

As mentioned above, drone 26 and user 24 may communicate via secured wireless radio link 27. By way of example, first wireless transceiver 46 of first wearable structure 30 may be configured for communication with drone 26 via a first wireless communication link 66 and second wireless transceiver 56 of second wearable structure 32 may be configured for communication with drone 26 via a second wireless communication link 68. Collectively, first and second wireless radio links 66, 68 form secured wireless radio link 27. Additionally, first and second NFMI/NFEMI transceivers 48, 58 may enable wireless communication (generally represented by NFMI/NFEMI CHANNELS 70) between first and second wearable structures 30, 32 in some embodiments. Processing elements 50, 60 may be configured to suitably process information for transmission via the corresponding first and second wireless transceivers 46, 56, and first and second NFMI/NFEMI transceivers 48, 58, and/or to suitably process information for output from speakers 52, 62 and/or input at microphones 54, 64. As will be discussed in greater detail below, a wireless communication technology (e.g., Bluetooth communication) may be implemented to enable communication via first and second communication links 66, 68 and thereby establish local wireless zone 44 (FIG. 2). Another wireless communication technology (e.g., near-field magnetic induction communication) may be implemented to enable communication between first and second wearables 30, 32.

FIG. 5 shows a simplified block diagram of components on-board drone 26. In general, drone 26 includes a processing unit 72, a first communication module 74, a sensor system in the form of one or more cameras 76A, 76B, one or more camera control units 78A, 78B, a drive control unit 80, a propulsion system 82 (e.g., one or more motors), a second communication module (referred to herein as a V2X communication module 84), and a battery monitor circuit 86 (monitoring a battery output voltage), all of which are powered by a battery 88. One or more communication buses, such as a CAN bus, or signal lines may couple processing unit 72, wireless communication module 74, camera 76, camera control unit 78, drive control unit 80, propulsion system 82, V2X communication module 84, battery monitor circuit 86, and battery 88.

First wireless communication module 74 may include a transceiver 90 and a radio processor 92. Transceiver 90 of first wireless communication module 74 residing on drone 26 is configured to communicate with first and second wearable structures 30, 32 via the secured wireless radio link 27 and radio processor 92 may be configured to suitably process messages for transmission from transceiver 90 or receipt at transceiver 90. In accordance with the illustrated example, first transceiver 46 (as a third communication module) and first communication module 74 are configured to enable and maintain first wireless communication link 66 and second transceiver 56 (as a fourth communication module) and first communication module 74 are configured to enable and maintain second wireless communication link 68.

In some embodiments, first and second location data 94, 96 may be communicated via respective first and second communication links 66, 68 between user device 22 and drone 26. Further, incoming user messages 98 from user 24 to drone 26 may be communicated via at least one of first and second communication links 66, 68. Still further, outgoing user messages 100 from drone 26 to user 24 may be communicated via at least one of first and second communication links 66, 68.

Processing unit 72 may be configured to perform multiple operations. For example, processing unit 72 may utilize first and second location data 94, 96 to adjust the speed and position of drone 26 relative to user 24 (FIG. 2). Additionally, processing unit 72 may acquire incoming user messages 98 (received and suitably processed at first communication module 74) and convert incoming user messages 98 to outgoing V2X messages 102. The converted outgoing V2X messages 102 are authenticated for correctness before communicating outgoing V2X messages 102 to V2X communication module 84 for transmission to autonomous vehicle 28 via V2X communication link 29. Conversely, incoming V2X messages 104 output by autonomous vehicle 28 may be received at V2X communication module 84 and may be communicated to processing unit 72. Incoming V2X messages 104 may be processed at processing unit 72 for the required fields to be converted to outgoing user messages 100. In the illustrated configuration, outgoing user messages 100 may be transmitted via at least one of first and second wireless communication links 66, 68 to user device 22 where they may be output at speakers 52, 62 (FIG. 4) as audible messages.

V2X communication module 84 may be a software-defined radio (SDR) in which its components are implemented by means of software on a general-purpose processor or embedded system. As such, the processor may be equipped with a sound card, or other analog-to-digital converter, preceded by a radio frequency (RF) front end. Alternatively, V2X communication module 84 may be implemented in hardware (e.g., mixers, filters, amplifiers, modulator/demodulators, detectors, and so forth). Still further, V2X communication module 84 may be implemented in mixed analog and digital circuitry.

In some embodiments, processing unit 72 may also acquire visual information 106A, 106B captured at cameras 76A, 78B. In some embodiments, visual information 106A from camera 76A may be utilized by processing unit 72 for facial recognition for authentication of user 24 (as an authorized authority). Additionally, or alternatively, visual information 106A from camera 76A may be captured motion of user 24 such as body gestures of user 24 which may be utilized by processing unit 72 for gesture recognition for controlling traffic movement during an atypical situation (e.g., traffic accident scene, broken traffic signal, temporary road blockage or diversion, and so forth). In other embodiments, visual information 106B from camera 76B may be an ambient environment visible from camera 76. The ambient environment could be, but is not limited to, traffic density, kinds of vehicles, and so forth.

Processing unit 72 may include a processing module 108 (e.g., an artificial intelligence (AI) and machine learning (ML) engine). The AI-ML engine, also referred to as an algorithm, may be trained for facial recognition, gesture command recognition, and/or voice command recognition. Machine learning may be implemented to learn the gesture commands and different voice commands based on the atypical situations. As such, visual information 106 may be processed at processing module 108 with the AI-ML engine. For example, a deep learning algorithm may be executed to process visual information 106 for authentication via facial recognition. Further, the deep learning algorithm may be executed to process visual information 106 to infer or otherwise determine traffic control gestures and/or to interpret traffic control commands from an audible-based incoming user message 98 from user 24. Still further, machine learning may be implemented to partially automate the process. By way of example, certain commands could entail "Long trucks are being deviated to lane 1," "Passenger vehicles are being deviated to lane 2," and so forth. Once such commands are known by processing unit 72 of drone 26, AI may learn to predict/identify the vehicle and navigate the vehicle without further need of voice commands (e.g., incoming user messages 98) from user 24.

A control algorithm executed at processing unit 72 may also provide commands to move drone 26 to particular positions or facing particular directions relative to user 24 as instructed by user 24 via incoming user messages 98. Accordingly, processing unit 72 may provide motion parameters 110 to drive control unit 80 to adjust a speed and/or position of drone 26 to move drone 26 to a particular location relative to user 24 using propulsion system 82 to get the desired visual information 106. The control algorithm executed at processing unit 72 may also provide camera instructions 112A to camera control unit 78A to focus camera 76 on user 24. In some embodiments, camera instructions 112A may be configured to direct camera 76 along a sight axis 114A (see FIG. 2) between first and second wearable structures 30, 32 such that an auto focus feature of camera 76A is approximately centered on user 24. Alternatively, processing unit 72 may provide camera instructions 112B to camera control unit 78B to direct a sight axis 114B of camera 76B toward an ambient external environment (e.g., traffic congestion at an accident scene and so forth).

Briefly referring to FIG. 2, drone 26 is illustrated as being located at two different locations 41, 43. Such a configuration may have only a single camera 76 directable toward user 24 or outwardly from user 24 toward an ambient environment. However, in some embodiments, drone 26 may be located at a location, e.g., second location 43, and sight axis 114B for camera 76B may be directed toward the ambient external environment while axis 114A for camera 76A is directed toward user 24. Still other embodiments may include more than two cameras suitably controlled and directed to view a user and/or the ambient environment in multiple directions.

With reference back to FIG. 5, the terms "engine," "algorithm," "unit," "module," as used herein, refer to logic embodied in hardware or firmware, or to a collection of software instructions written in a programming language and executed by processing unit 72. Processing unit 72 may be a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor can be a microprocessor, but in the alternative, the processor can be a controller, microcontroller, or state machine, combinations of the same, or the like. A processor can include electrical circuitry configured to process computer-executable instructions. Processing unit 72 can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor may also include primarily analog components. For example, some or all of the signal processing algorithms described below may be implemented in analog circuitry or mixed analog and digital circuitry.

First location data 94, second location data 96, incoming user messages 98, outgoing user messages 100, outgoing V2X messages 102, incoming V2X messages 104 visual information 106A, 106B, motion parameters 110, and camera instructions 112A, 112B are all represented by individual blocks in FIG. 5 for simplicity. This information may be conveyed between the elements of system 20 using various suitable wired and wireless protocols.

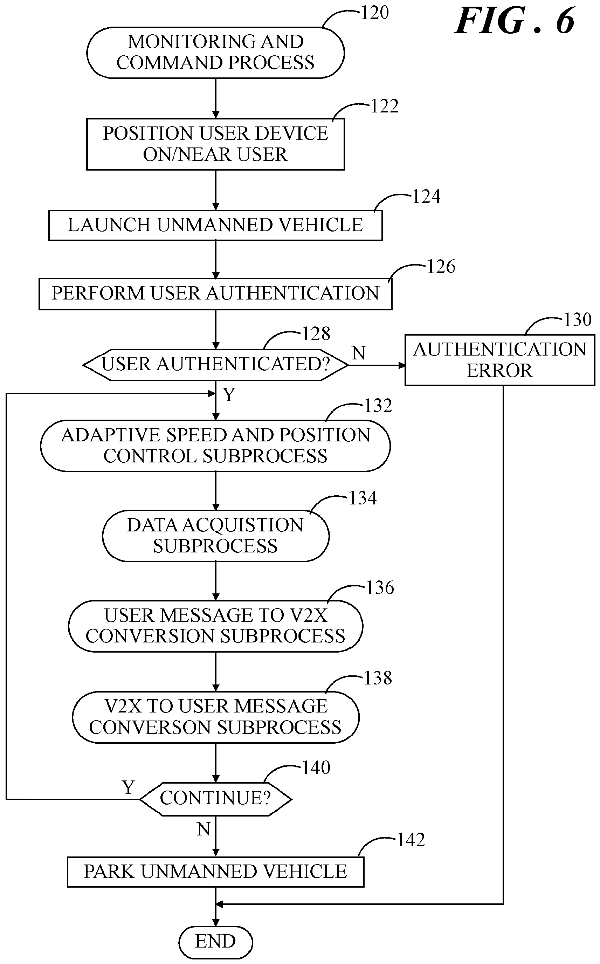

FIG. 6 shows a flowchart of a monitoring and command process 120 in accordance with another embodiment. Monitoring and command process 120 provides high level operational blocks and subprocesses associated with intelligently adapting the speed and position of drone 26 relative to user 24 in real time, data acquisition, user message to V2X conversion, and V2X to user message conversion. Monitoring and command process 120 may be performed by drone 26, which may be utilizing processing unit 72. For convenience, reference should be made concurrently to FIGs. 1-6 in connection with the ensuing description.

In accordance with an operational block 122 of process 120, user device 22 is positioned on or near user 24. In the illustrated example, first and second wearable structures 30, 32, as hearables, are positioned in first and second ears 36, 40 of user 24. Further, user device 22 may be turned on or otherwise activated.

In accordance with an operational block 124 of process 120, the unmanned vehicle (e.g., drone 26) is launched. The launch of drone 26 may occur in response to power up commands by user 24 or by another individual. Drone 26 may be launched from a charging pad or from a launch site near user 24. After drone 26 is launched, and perhaps placed in a hover mode, an operational block 126 may be performed. At operational block 126, user authentication is performed. User authentication entails ensuring whether an authorized entity is utilizing drone 26. User authentication can encompass a wide variety of processes. In some embodiments, processing unit 72 may be trained for recognition of a specific user's gesture and/or language. Thus, user authentication may involve receipt and interpretation of user messages (audible or gesture commands from user 24) at processing unit 72. In other embodiments, user authentication may involve execution of a facial recognition scheme in which processing unit 72 receives visual information 106 of user 24 and "recognizes" user 24 based on prior machine learning. Other user authentication techniques may alternatively be implemented to ensure that the appropriate user 24 is operating drone 26.

At a query block 128, a determination is made as to whether the user was authenticated. When a determination is made at query block 128 that the user was not authenticated, process control continues with an operational block 130. At block 130, an authentication error message may be provided to one or both of the user and drone 26. Thereafter, drone 26 may take precautionary measures such as landing and power down, and the execution of monitoring and command process 120 ends. However, when a determination is made at query block 128 that the user was authenticated, an adaptive speed and position control subprocess 132, a data acquisition subprocess 134, a user message to V2X conversion subprocess 136, and a V2X to user message conversion subprocess 138 may be performed.

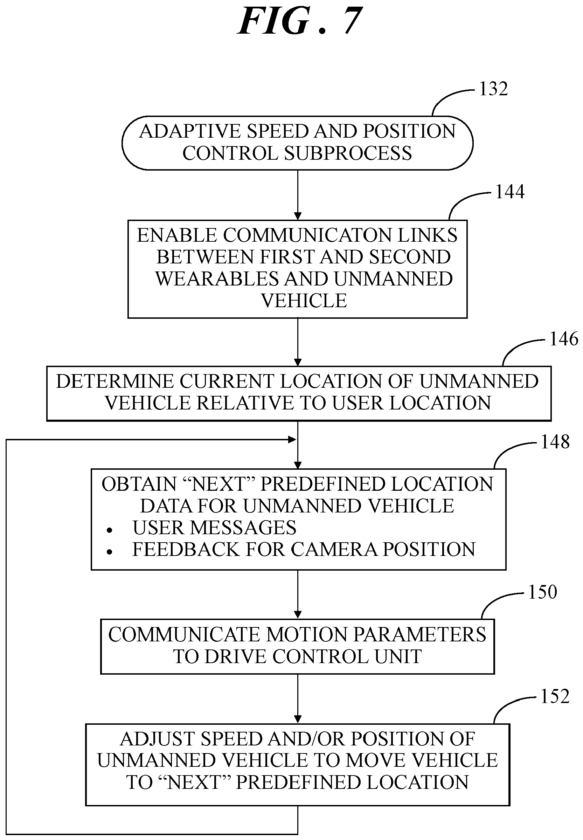

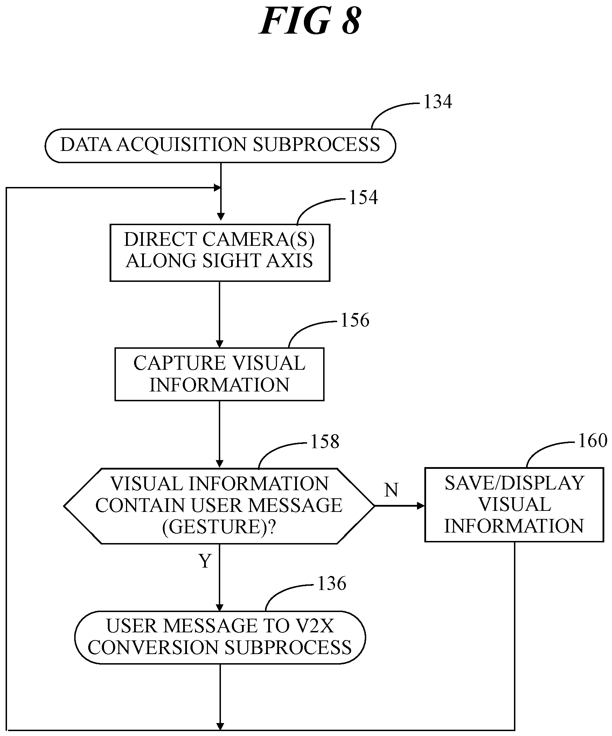

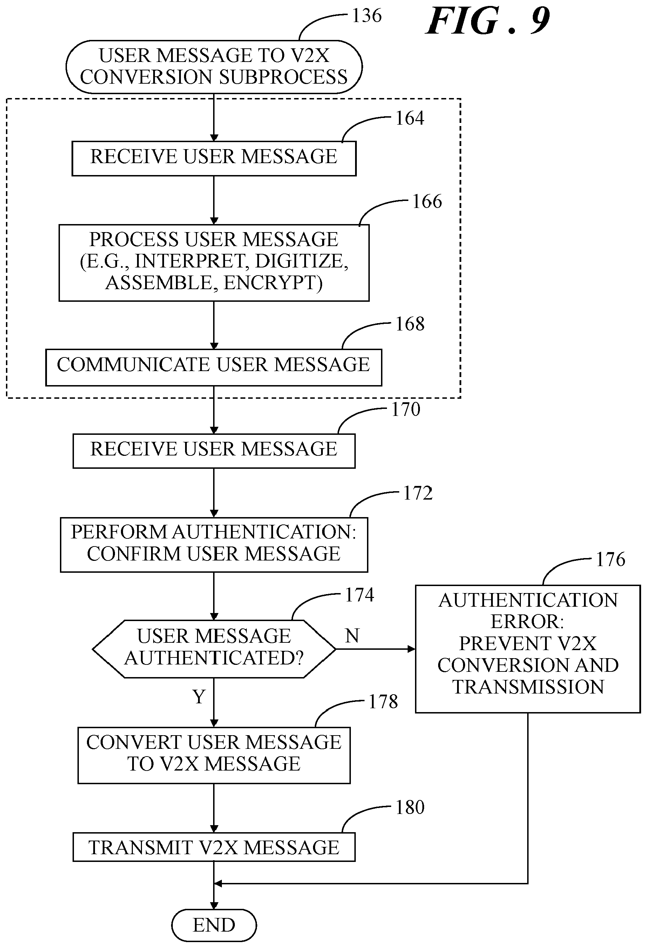

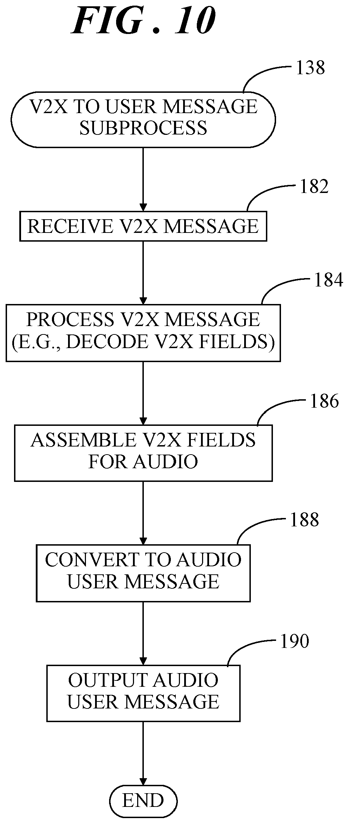

In general, adaptive speed and position control subprocess 132 may be executed to determine a current location of drone 26 relative to user 24 and to adjust a speed and position of drone 26 to move drone 26 from the current location to a predefined location relative to user 24. Adaptive speed and position control subprocess 132 will be discussed in connection with the flowchart of FIG. 7. Data Acquisition subprocess 134 may be executed to receive and interpret visual information 106A, 106B from cameras 76A, 78B. Data acquisition subprocess 134 will be discussed in connection with the flowchart of FIG. 8. User message to V2X conversion subprocess 136 may be executed to convert received incoming user messages from user 24 to outgoing V2X messages for communication to autonomous vehicle 28. User message to V2X conversion subprocess 136 will be discussed in connection with the flowchart of FIG. 9. V2X to user message conversion subprocess 138 may be executed to convert received incoming V2X messages from autonomous vehicle 28 to outgoing user messages for communication to user 24. V2X to user message conversion subprocess 138 will be discussed in connection with the flowchart of FIG. 10.

Subprocesses 132, 134, 136, 138 are presented in monitoring and command process 120 in sequential order for simplicity. However, it will become apparent in the ensuing discussion, that subprocesses 132, 134, 136, 138 may be performed in any order. Alternatively, some or all of subprocesses 132, 134, 136, 138 may be performed in parallel for enhanced computational efficiency, and to enable the real time exchange of information between processing elements of drone 26.

At a query block 140, a determination is made as to whether execution of monitoring and command process 120 is to continue. By way of example, monitoring and command process 120 may be continued for the duration of the user's 24 involvement in a particular atypical situation, for some predetermined time period, or until battery monitor circuit 86 determines that battery power of battery 88 is getting low.

When a determination is made at query block 140 that execution of process 120 is to continue, process control loops back to continue execution of adaptive speed and position control subprocess 132, data acquisition subprocess 134, user message to V2X conversion subprocess 136, and/or V2X to user message conversion subprocess 138. Accordingly, drone 26 is capable of continuously adapting its speed and position in response to commands from user 24, acquiring visual information 116, performing user message to V2X message conversions, and performing V2X message to user message conversions.

When a determination is made at query block 140 that execution of monitoring and command process 120 is to be discontinued, an operational block 142 may be performed to park drone 26 on a charging pad or at a landing site. Thereafter, monitoring and command process 120 ends.

FIG. 7 shows a flowchart of adaptive speed and position control subprocess 132 of monitoring and command process 120 (FIG. 6). Adaptive speed and position control subprocess 132 may be performed by drone 26 to continuously enable drone 26 to adapt its speed and position in real time based upon the location of user 24, user commands, and so forth. For convenience, reference should be made concurrently to FIGs. 1-5 and 7 in connection with the following description.

At a block 144, first and second wireless communication links 66, 68 are enabled between first and second wearable structures 30, 32 and the unmanned vehicle (e.g., drone 26). In some embodiments, first and second transceivers 46, 56 of respective first and second wearable structures 30, 32 and first communication module 74 of drone 26 are configured to implement a first wireless communication technology to enable first and second wireless communication links 66, 68. The first wireless communication technology may be Bluetooth Classic or Bluetooth Low Energy (BLE) technology. However, other "short-link" wireless technologies, such as Ultra-Wide Band (UWB) for exchanging data between portable devices over short distances with low power consumption may alternatively be implemented. In an example configuration, first communication module 74 of drone 26 may serve as a master device, with first and second transceivers 46, 56 of first and second wearable structures 30, 32 functioning as slave devices. A bonding or pairing procedure may be performed to connect first and second transceivers 46, 56 with first communication module 74.

At a block 146, a current location of the unmanned vehicle (e.g., drone 26) relative to a location of user 24 may be determined. That is, a location of user 24 and a current location of drone 26 relative to user 24 may be determined. By way of example, Bluetooth Core Specification (v5.1) and marketed as Bluetooth 5.1 Direction Finding includes Angle of Arrival (AoA) and Angle of Departure (AoD) features for accurately determining the position of a Bluetooth transmitter in two or three directions. Although Bluetooth 5.1 is mentioned, later versions of Bluetooth 5.x may additionally include AoA and AoD direction finding capability. In an AoA concept, first transceiver 46 may broadcast first location data 94 to first communication module 74 at drone 26 via first wireless communication link 66. Processing unit 72 on-board drone 26 measures the arrival angle, θ₁ (see FIG. 2), to determine the location of first wearable structure 30. Similarly, second transceiver 56 may broadcast second location data 96 to first communication module 74 at drone 26 via second wireless communication link 68. Processing unit 72 on-board drone 26 measures the arrival angle, θ₂ (see FIG. 2), to determine the location of second wearable structure 32. From the two arrival angles, θ₁ and θ₂, a location of user 24 may be interpolated as a point midway between the individual locations of first and second wearable structures 30, 32 and the current location of drone 26 relative to the location of user 24 may be derived. Although AoA is described as one technique, AoD may alternatively be implemented. Further in a UWB application, Time of Flight (ToF) may be utilized to obtain accurate distance/location measurements.

At a block 148, a "next" predefined location data for drone 26 is obtained. The "next" predefined location data may be provided via user messages (e.g., incoming user messages 98 or gesture commands contained in visual information 106A from camera 76A, displacement of first and second wearable structures 30, 32 for tracking, and so forth). The "next" predefined location may be a location of drone 26 relative to user 24 (e.g., first location 41 in FIG. 2), a predefined location based upon a desired camera position (e.g., second location 43 in FIG. 2), or any combination thereof.

At a block 150, motion parameters 110 may be communicated from processing unit 72 to drive control unit 80, and at a block 152, drive control unit 80 sends suitable commands to propulsion system 82 to adjust the speed and/or position of drone 26 to move drone 26 to the "next" predefined location (e.g., first location 41, second location 43, or another location) relative to user 24. Process flow loops back to block 148 when "next" predefined location data is obtained for drone 26. The execution of adaptive speed and position control subprocess 132 may continue until a determination is made at query block 140 (FIG. 6) that execution of monitoring and command process 120 (FIG. 6) is to be discontinued.

Accordingly, the execution of adaptive speed and position control subprocess 132 enables the intelligent positioning of drone 26 relative to user 24 to get the best visual information 106A, 106B based on first and second location data 94, 96 from first and second wearable structures 30, 32, processing unit 72, and user messages. Additionally, execution of subprocess 132 may enable tracking of user 24 by tracking the movement of first and second wearable structures 30, 32 to ensure that drone 26 is suitably positioned relative to user 24. Further, the speed and/or position of drone 26 may be suitably adjusted so that sight axis 114A of camera 76A is directed toward user 24 and/or sight axis 114B of camera 76B is directed outwardly in the same direction of user 24 and/or sight axes 114A, 114B are directed in any other desired position.

FIG. 8 shows a flowchart of data acquisition subprocess 134 of monitoring and command process 120 (FIG. 6). In an embodiment, data acquisition subprocess 134 may include capturing visual information 106A, 106B via cameras 76A, 76B. Visual information 106A may be gestures of user 24 when, for example, sight axis 114A of camera 76A is directed toward user 24. Visual information 106B may be information regarding the ambient environment (e.g., traffic patterns, traffic congestion, and the like) when, for example, sight axis 114B of camera 76B is directed outwardly from user 24. For convenience, reference should be made concurrently to FIGs. 1-5 and 8 in connection with the following description.

At a block 154, camera(s) 76A, 76B are directed along their respective sight axes 114A, 114B and at block 156, camera(s) 76A, 76B capture visual information 106A, 106B. The captured visual information 106A may include a user message in the form of, for example, traffic control gestures made by user 24. The traffic control gestures may be captured when, for example, sight axis 114A of camera 76A is centered on user 24. Visual information 106B may be the ambient environment visible from camera 76B when sight axis 114B is directed outwardly from user 24. Both visual information 106A and 106B may be captured in parallel, e.g., at the same time, when drone 26 includes at least two cameras. If drone 26 includes only one camera, the visual information of both user motion and the ambient environment may occur in a serial manner.

At a query block 158, a determination is made as to whether the captured visual information includes motion of user 24 (e.g., traffic control gestures). In an example, processing unit 72 may able to identify visual information 106A as being motion of user 24 by knowledge of the location of camera 76A in relation to user 24, by recognition of user 24 in visual information 106A, by preset conditions of drone 26, or some combination thereof. When a determination is made at query block 158 that visual information 106A includes motion of user 24, user message to V2X conversion subprocess 136 (FIG. 9) may be executed to convert visual information 106A to outgoing V2X messages 102. Alternatively, when a determination is made at query block 158 that the captured visual information does not include motion of user 24, but instead includes images of the ambient environment, e.g., visual information 116B, process control continues with a block 160. Accordingly, query block 158 may individually identify separate packets of visual information 106A, 106B. Alternatively, processing capabilities may enable separate parallel processing paths for visual information 106A (user motion) and 106B (ambient environment) such that processing unit 72 does not have to distinguish between them.

At block 160, visual information 106B may be saved at least temporarily in, for example, a memory element, be subject to analysis and interpretation by processing unit 72, and/or be provided for visual reference to user 24. Following either of conversion of visual information 106 to outgoing V2X messages 102 in accordance with user message to V2X conversion subprocess 136 and/or block 160, program control loops back to block 154 to continue acquiring visual information 106A, 106B. The execution of data acquisition subprocess 134 may continue until a determination is made at query block 140 (FIG. 6) that execution of monitoring and command process 120 (FIG. 6) is to be discontinued. Accordingly, the execution of data acquisition subprocess 134 enables acquisition of visual information via one or more cameras and assessment of the visual information by processing unit 72 to identify motion (e.g., traffic control gestures) of user 24 and/or to provide images of the ambient environment in which user 24 and drone 26 are deployed.

FIG. 9 shows a flowchart of user message to V2X conversion subprocess 136 of monitoring and command process 120 (FIG. 6). In general, user message to V2X conversion subprocess 136 may be performed by user device 22 and a first vehicle, e.g., drone 26, to receive and convert user messages from user 24 to V2X messages that may thereafter be communicated to a second vehicle, e.g., autonomous vehicle 28. For convenience, reference should be made concurrently to Figs. 1-5 and 9 in connection with the following description.

As shown in the flowchart of FIG. 9, a dashed line box encircles operational blocks 164, 166, and 168 of user message to V2X conversion subprocess 136. In some embodiments, the operations associated with blocks 164, 166, and 168 may be performed at user device 22. These operations pertain to receipt of incoming user messages 98, in the form of audible messages spoken by user 24 (e.g., voice commands) and the transmission of user messages to drone 26. Subsequent operational blocks 170, 172, 174, 176, 178, and 180 may thereafter be performed to convert these incoming user messages 98 to outgoing V2X messages 102s.

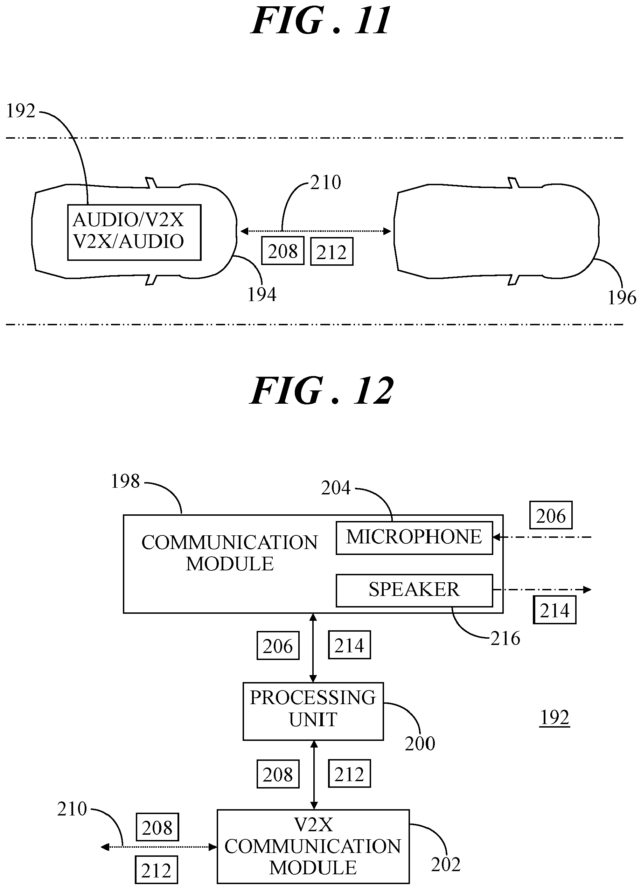

Alternatively, operational blocks 164, 166, 168 may not be executed if the user messages are gestures of user 24 captured as visual information 106 via camera 76 on-board drone 26 and communicated to processing unit 72 at drone 26. In such a situation, only operational blocks 170, 172, 174, 176, 178, and 180 may be performed at drone 26 to convert the visual information 106 to outgoing V2X messages 102. Further, and as will be discussed in connection with FIGs. 11 and 12, some embodiments may not include user device 22 functioning in concert with drone 26. In such an embodiment, only operational blocks 170, 172, 174, 176, 178, and 180 may be performed at a first vehicle (that may not be drone 26) to convert user messages to outgoing V2X messages.

Accordingly, at block 164, a user message is received. Again, the user message may be an audible message (e.g., voice command) spoken by user 24 and received, or otherwise captured, at microphones 54 and/or 64 of user device 22. At block 166, one or both of processing elements 50, 60 of user device 22 may suitably process the audible message. For example, processing elements 50, 60 may suitably interpret, digitize, assemble, and encrypt the audible message to form a user message suitable for transmission via one or more of first and second wireless communication links 66, 68. At block 168, the user message is transmitted from user device 22 via a secured radio link (e.g., at least one of first and second wireless communication links 66, 68) to the first vehicle, e.g., drone 26.

At block 170, the user message may be received at drone 26. In an embodiment, the user message be received over at least one of first and second wireless communication links 66, 68 as incoming user message 98. In another embodiment, the received user message may be gestures of user 24 captured as visual information 106 via camera 76 on-board drone 26 and communicated to processing unit 72 at drone 26. In yet another embodiment, the received user message may be a combination of incoming user message 98 and gestures of user 24 captured as visual information 106.

At block 172, an authentication process may be performed to verify the identity of user 24 and to ensure that the content of incoming user message 98 has not changed or is otherwise incorrect. In one example, drone 26 may communicate incoming user message 98 back to user device 22 via one of first and second wireless communication links 66, 68 where it can be converted back to the audible message for playback to user 24 via at least one of speakers 52, 62 of user device 22. In another example, drone 26 may interpret visual information to identify a particular traffic control gesture and may communicate the particular traffic control gesture back to user 24, where it can be converted to an audible message for playback to user 24.

Query block 174 may be performed in connection with authentication block 172. At query block 174, a determination is made as to whether the user message (e.g., incoming user message 98 and/or visual information 106) has been authenticated. When the incoming user message cannot be authenticated, process control continues to block 176. At block 176, an authentication error may be communicated to user 24 and user message to V2X message conversion and transmission may be prevented. Thereafter, user message to V2X conversion subprocess 136 may end. However, when a determination is made at query block 174 that incoming user message 98 and/or the particular gesture was indeed authenticated, process control continues to block 178. At block 178, incoming user message 98 and/or the particular gesture is converted to outgoing V2X message 102. At block 180, outgoing V2X message 102 is transmitted to the second vehicle, e.g., autonomous vehicle 28, via V2X communication link 29. Thereafter, a single iteration of user message to V2X conversion subprocess 136 may end. Of course, it should be understood that execution of user message to V2X conversion subprocess 136 may be continuously repeated while user 24 is issuing voice commands (audible messages) and/or providing gesture commands.

FIG. 10 shows a flowchart of V2X to user message conversion subprocess 138 of monitoring and command process 120 (FIG. 6). V2X to user message conversion subprocess 138 may be executed to convert received incoming V2X messages 104 from the second vehicle (e.g., autonomous vehicle 28) to outgoing user messages 100 for communication to user 24, thus enabling a complete closed loop configuration. V2X to user message conversion subprocess 138 may be performed at a first vehicle (e.g., drone 26). For convenience, reference should be made concurrently to Figs. 1-5 and 10 in connection with the following description.

At a block 182, incoming V2X message 104 is received from autonomous vehicle 28 at V2X communication module 84 of drone 26 via V2X communication link 29. At a block 184, incoming V2X message 104 is suitably processed at processing unit 72 of drone 26. Processing of incoming V2X message 104 may entail decoding V2X fields of incoming V2X message 104. At a block 186, the decoded V2X fields of incoming V2X message 104 may be suitably assembled for audio. At a block 188, audio processing may be performed to convert the information to outgoing user message 100. At a block 190, outgoing user message 100 may be output as an audible message to user 24. In some embodiments, at block 190 outgoing user message 100 may be communicated via at least one of first and second wireless communication links 66, 68 to user device 22, where outgoing user message 100 may be subsequently output to user 24 via at least one of speakers 52, 62 of user device 22.

Thus, execution of the various processes described herein enable autonomous real time positioning of an unmanned vehicle relative to a user, data acquisition of visual information motion of the user and/or visual information of an ambient environment, user message (e.g., voice and/or gesture) to V2X message conversion for communication to an autonomous vehicle, and V2X message to user message (e.g., voice) conversion for communication to the user. It should be understood that certain ones of the process blocks depicted in FIGs. 6-10 may be performed in parallel with each other or with performing other processes. In addition, the particular ordering of the process blocks depicted in FIGs. 6-10 may be modified while achieving substantially the same result. Accordingly, such modifications are intended to be included within the scope of the inventive subject matter.

### VEHICLE-TO-VEHICLE

The previous discussion was directed to a first vehicle (e.g., an unmanned vehicle or drone) that is paired with a user device positioned on or near a user. Such a configuration may be useful in a scenario in which, for example, an authorized authority may be directing autonomous vehicles at accident scenes, broken traffic signals, temporary road blockages or diversions due to roads undergoing unplanned maintenance, extreme weather conditions, and so forth. In an alternative embodiment, an authorized vehicle (e.g., police vehicle) may be enabled to command an autonomous vehicle to pull over and come to a stop.

Referring now to FIGs. 11-12, FIG. 11 shows a conceptual diagram of a system 192 for communication between vehicles in accordance with another embodiment and FIG. 12 shows a block diagram of the system of FIG. 11. System 192 (labeled AUDIO/V2X V2X/AUDIO) may be implemented in a first vehicle 194. System 192 enables communication between an inhabitant (e.g., police officer) of first vehicle 194 and a second vehicle 196, in which second vehicle 196 may be any semi-autonomous or fully autonomous vehicle. Again, for clarity, second vehicle 196 will be generally referred to herein as autonomous vehicle 196.

With particular reference to FIG. 12, system 192 implemented in first vehicle 194 includes a first communication module 198, a processing unit 200, and a second communication module 202 (labeled V2X COMMUNICATION MODULE). First communication module 198 may include one or more microphones 204 configured to receive an incoming user message 206 (e.g., an audible message) from the inhabitant of first vehicle 194. Incoming user message 206 may be, for example, an audible command from the vehicle's inhabitant to pull over and stop.

Processing unit 200 is configured to convert incoming user message 206 to an outgoing V2X message 208, as discussed above in connection with operational blocks 170, 172, 174, 176, and 178 of user message to V2X conversion subprocess 136 (FIG.9). Second communication module 202 is configured to transmit outgoing V2X message 208 from first vehicle 194 to autonomous vehicle 196 via a wireless communication link 210 in accordance with block 180 of user message to V2X conversion subprocess 136, implementing any suitable V2X communication technology such as WLAN-based communications, DSRC, cellular V2X, and so forth.

In some embodiments, second communication module 202 may additionally be configured to receive an incoming V2X message 212 from autonomous vehicle 196 via wireless communication link 210. Processing unit 200 is configured to convert incoming V2X message 212 to an outgoing user message 214, as discussed above in connection with V2X to user message conversion subprocess 138 (FIG. 100). Thereafter, outgoing user message 214 may be output from a speaker system 216 of first communication module 204 as an audible message that can be heard by the inhabitant of first vehicle 194.

Accordingly, system 192 which may be implemented in an emergency vehicle (e.g., first vehicle 194), enables real time interaction with autonomous vehicles (e.g., second vehicle 196) by voice command from an authorized authority inhabiting the first vehicle. In particular, voice commands can be converted to equivalent V2X commands by system 192. Additionally, system 192 may enable the interaction of the autonomous vehicle (e.g., second vehicle 196) with the inhabitant of the emergency vehicle (e.g., first vehicle 194) by receiving and converting V2X messages from the autonomous vehicle to audible user messages that can be broadcast to the authorized authority from the speakers of system 192.

The above discussion focused primarily on monitoring and command of an autonomous vehicle, so that the autonomous vehicle may perform certain actions as needed. However, the system may be adapted for other applications. For example, certain configurations may not include an unmanned vehicle (e.g., drone) as a communication medium between an authorized user and autonomous vehicles in certain atypical situations. For example, the first communication module, processing unit, and second communication module may be implemented in the authorized user's emergency vehicle, and the user may have a user device (similar to that described above) that communicates to the vehicle-based elements implemented in the authorized user's emergency vehicle. That system may then provide the user message to V2X message conversion (and vice versa) and enable communication to autonomous vehicles to provide navigation commands at, for example, accident scenes, broken traffic signals, temporary road blockages or diversions due to roads undergoing unplanned maintenance, extreme weather conditions, and so forth. Still further, in a drone implementation, the drone may not be in continuous motion, but may instead be perched at a suitably high location (e.g., on a power utility pole) to view the ambient environment and potentially tap power from the utility pole.

Still further, other situations may occur in which the appropriate authorities may need to interact with other non-vehicular devices, sometimes referred to "smart" devices.

### VEHICLE-TO-NONVEHICULAR DEVICE

Previous embodiments entail configurations in which communications are enabled between a user (using a drone as a communication medium) or an authorized user's emergency vehicle equipped with V2X capability) and an autonomous vehicle. In other embodiments, the system and methodology may be adapted to enable communication between a user (using a drone as a communication medium) or an authorized user's emergency vehicle equipped with V2X capability and a nonvehicular device that is also equipped with V2X capability. Such nonvehicular devices may include, but are not limited to any roadside units, "smart" traffic lights, "smart" parking infrastructures, or any other non-vehicular structure that may be enabled to interact with an authorized authority by way of V2X communication.

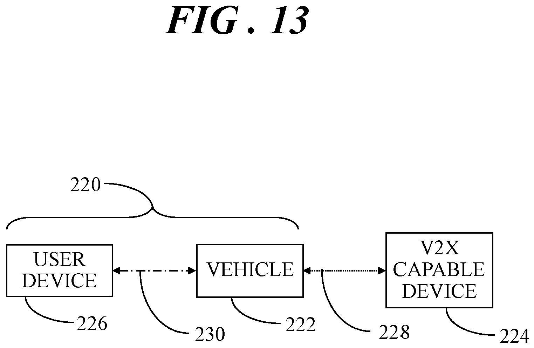

FIG. 13 shows a conceptual diagram of a system 220 for communication between a vehicle 222 and a device 224 equipped with V2X capability (V2X CAPABLE DEVICE) in accordance with an embodiment. Device 224 may be a nonvehicular device such as those described above. In the illustrated embodiment, system 220 includes an electronic device, referred to herein as a user device 226, worn on or positioned near a human user. User device 226 may be equivalent to, for example, user device 22 (FIGs. 2-4, discussed above). The elements of user device 226 may include first and second wearable structures 30, 32, a description of which will not be repeated herein for brevity.

System 220 further includes elements that are implemented in vehicle 222. Vehicle 222 may be equivalent to, for example, drone 26 (FIGs. 2 and 5), and as such, will be referred to herein as drone 222. The elements of drone 222 may include first communication module 74, processing unit 72, one or more cameras 76A, 76B, one or more camera control units 78A, 78B, drive control unit 80, propulsion system 82, V2X communication module 84, battery monitor 86, and battery 88A, a description of which will not be repeated herein for brevity.

In this example, device 224 may be equipped to communicate with drone 222 via V2X communications. Accordingly, communication between drone 222 and device 224 may be over a V2X communication link 228, similar to wireless communication link 29 as discussed above. Additionally, communication between user device 226 and drone 222 may be over a secured wireless radio link 230, similar to wireless communication link 27 as discussed above. System 220 may be implemented to, for example, control traffic lights, obtain status information, and so forth by using the user message to V2X message conversion and V2X message to user message conversion capabilities discussed in detail above.

Although system 220 includes drone 222 and user device 226 (similar to the configuration of FIG. 1, alternative embodiments of a vehicle-to-nonvehicular device configuration may entail a system (e.g., system 192 of FIG. 11) implemented in an authorized user's emergency vehicle equipped with V2X capability (e.g., vehicle 194 of FIG. 11) that is configured to interact with nonvehicular device 224 for exchanging V2X messages via V2X communication link 228.

Embodiments described herein entail systems and methodology for enabling communication between human users and vehicles having at least semi-autonomous motion capability. More particularly, systems and methodology enable the interaction of an authorized authority, e.g., a traffic officer, with autonomous vehicles by converting user messages (e.g., audible or gestures) to equivalent voice-to-everything (V2X) messages and vice versa. In some embodiments, this conversion of audible messages to equivalent V2X messages may be performed using a trained, authenticated unmanned vehicle (e.g., a drone) as a communication medium. The system and methodology may entail real time autonomous positioning and navigation of the unmanned vehicle in accordance with user messages. The unmanned vehicle may further include one or more cameras for capturing motion of the user which can be converted to user messages. Still further, the one or more cameras may be configured to capture an ambient environment visible from the one or more cameras and provide visual information of the ambient environment to the user. In other embodiments, a system in a vehicle of the authorized authority may be used as a communication medium for converting audible messages to equivalent V2X messages and vice versa. In still other embodiments, systems and methodology may enable the interaction of an authorized authority with other nonvehicular devices equipped with V2X capability.

For the avoidance of doubt, the present disclosure extends to methods as claimed below and any one or more of:
A: capturing motion of a user at a camera implemented in the first vehicle to obtain visual information of the user; and determining the user message from the visual information.
B: wherein the user is positioned in the first vehicle, and the method further comprises: capturing the user message as an audible message from the user; and converting the audible message to the V2X message for transmission via the wireless communication link.
C: wherein: the V2X message is configured for transmission via the wireless communication link to a second vehicle having at least semi-autonomous motion capability; the audible message includes a voice command from the user configured to influence navigation of the second vehicle; the converting the audible message includes converting the voice command to the V2X message; and the method further comprises commanding the navigation of the second vehicle via the voice command included in the transmitted V2X message.
D: wherein the user message is a first user message, the V2X message is a first V2X message, and the method further comprises: receiving a second V2X message at the first vehicle via the wireless communication link; converting the second V2X message to a second user message at the first vehicle; and transmitting the second user message from the first vehicle.
E: wherein: the transmitting the second user message comprises converting the second user message to an audible message; and outputting the audible message for detection by a user.

This disclosure is intended to explain how to fashion and use various embodiments in accordance with the invention rather than to limit the true, intended, and fair scope and spirit thereof. The foregoing description is not intended to be exhaustive or to limit the invention to the precise form disclosed. Modifications or variations are possible in light of the above teachings. The embodiment(s) was chosen and described to provide the best illustration of the principles of the invention and its practical application, and to enable one of ordinary skill in the art to utilize the invention in various embodiments and with various modifications as are suited to the particular use contemplated. All such modifications and variations are within the scope of the invention as determined by the appended claims, as may be amended during the pendency of this application for patent, and all equivalents thereof, when interpreted in accordance with the breadth to which they are fairly, legally, and equitably entitled.

## Claims

1. A system comprising:
a first communication module configured to receive a user message;
a processing unit configured to convert the user message to a vehicle-to-everything (V2X) message; and
a second communication module, wherein the first communication module, the processing unit, and the second communication module are implemented in a first vehicle, and the second communication module is configured to transmit the V2X message from the first vehicle via a wireless communication link.

2. The system of claim 1 wherein the wireless communication link is a first wireless communication link, and the system further comprises an electronic device configured to be positioned proximate a user, the electronic device including a third communication module, wherein the first and third communication modules are configured to enable a second wireless communication link between first vehicle and the electronic device for communication of the user message from the user to the first vehicle.

3. The system of claim 2 wherein the first vehicle is an unmanned vehicle, and:
the electronic device comprises:
a first wearable structure configured to be positioned on the user, the first wearable structure including the third communication module, wherein the first and third communication modules are configured to enable the second wireless communication link between the unmanned vehicle and the first wearable structure; and
a second wearable structure configured to be positioned on the user, the second wearable structure being physically displaced away from the first wearable structure, the second wearable structure including a fourth communication module, wherein the first and fourth communication modules are configured to enable a third wireless communication link between the unmanned vehicle and the second wearable structure;
the processing unit implemented in the unmanned vehicle is further configured to determine a current location of the unmanned vehicle relative to the user in response to the second and third wireless communication links; and
the system further comprises a drive control unit in communication with the processing unit and configured to adjust a speed and a position of the unmanned vehicle to move the unmanned vehicle from the current location to a predefined location relative to the user.

4. The system of claim 3 wherein the predefined location is included in the user message, the user message is an audible message from the user, and at least one of the first and second wearable structures comprises a microphone configured to capture the audible message from the user and at least one of the third and fourth communication modules is configured to communicate the audible message with the predefined location via at least one of the second and third communication links.

5. The system of any preceding clam further comprising a camera implemented in the first vehicle and configured to capture motion of a user and provide visual information of the user to the processing unit, wherein the processing unit is further configured to determine the user message from the visual information.

6. The system of any preceding claim wherein the first vehicle is an unmanned vehicle, and the system further comprises a camera implemented in the unmanned vehicle and configured to capture an ambient environment visible from the camera and provide visual information of the ambient environment to the user, and the user message is an audible message from the user responsive to the visual information.

7. The system of any preceding claim wherein the user message is a first user message, the V2X message is a first V2X message, and:
the second communication module is further configured to receive a second V2X message via the first wireless communication link;
the processing unit is further configured to convert the second V2X message to a second user message for communication of the second user message from the first vehicle to the electronic device; and
the electronic device further comprises a speaker configured to output the second user message as an audible message to the user.

8. The system of any preceding claim wherein a user is positioned in the first vehicle and the first communication system comprises a microphone for capturing the user message as an audible message from the user, wherein the processing unit is configured to convert the user message to the V2X message for transmission via the wireless communication link.

9. The system of claim 8 wherein the V2X message is configured for transmission to a second vehicle having at least semi-autonomous motion capability, the user message includes a voice command from the user configured to influence navigation of the second vehicle, and the V2X message includes the voice command for commanding navigation of the second vehicle.

10. The system of claim 8 or 9 wherein the user message is a first user message, the V2X message is a first V2X message, and:
the second communication module is further configured to receive a second V2X message via the wireless communication link;
the processing unit is further configured to convert the second V2X message to a second user message; and
the system further comprises a speaker implemented in the first vehicle configured to output the second user message as an audible message to the user.

11. The system of any preceding claim wherein:
the first communication module is configured to implement a first wireless communication technology to enable receipt of the user message; and
the second communication module is configured to implement a second wireless communication technology to enable transmission of the V2X message, the second wireless communication technology differing from the first wireless communication technology.

12. A method comprising:
receiving a user message at a first vehicle;
converting the user message to a vehicle-to-everything (V2X) message at the first vehicle; and
transmitting the V2X message from the first vehicle via a wireless communication link.

13. The method of claim 12 wherein the wireless communication link is a first wireless communication link, and the method further comprises:
enabling a second wireless communication link between the first vehicle and an electronic device positioned proximate a user for communication of the user message from the user to the first vehicle.

14. The method of claim 13 wherein the first vehicle is an unmanned vehicle, and the method further comprises:
positioning first and second wearable structures of the electronic device on the user, the first and second wearable structures being physically displaced away from one another;
enabling a second wireless communication link between the first wearable structure and the unmanned vehicle;
enabling a third wireless communication link between the second wearable structure and the unmanned vehicle;
determining a current location of the unmanned vehicle relative to the target in response to the second and third wireless communication links; and
adjusting a speed and a position of the unmanned vehicle to move the unmanned vehicle from the current location to a predefined location relative to the user.

15. The method of claim 14 further comprising:
capturing an audible message from the user at the electronic device, the predefined location being included in the audible message; and
communicating the audible message with the predefined location via at least one of the second and third communication links.
